# EUROPEAN PATENT APPLICATION

(11) **EP 3 742 007 A1**
(43) Veröffentlichungstag der Anmeldung: **25.11.2020**
(21) Anmeldenummer: 18900979.8
(22) Anmeldetag: 16.01.2018
(51) Int. Cl.: F16B 21/18, F16C 27/00, H02K 5/16

(54) **LAGERBEFESTIGUNGSVORRICHTUNG UND HYBRIDLEISTUNGSMODUL MIT EINER LAGERBEFESTIGUNGSVORRICHTUNG**

(71) Anmelder: Schaeffler Technologies AG & Co. KG, 91074 Herzogenaurach (DE)
(72) Erfinder: LIU, Xingfen, Shanghai 201804 (CN); CHEN, Yunfei, Shanghai 201804 (CN)
(86) Internationale Anmeldenummer: PCT/CN2018/072792
(87) Internationale Veröffentlichungsnummer: WO 2019/140547

(57) **Zusammenfassung**

Die vorliegende Erfindung stellt eine Lagerbefestigungsvorrichtung und ein die Lagerbefestigungsvorrichtung umfassendes Hybridleistungsmodul bereit. Die Lagerbefestigungsvorrichtung wird zum stationären Montieren des Lagers auf einer Welle verwendet und umfasst einen sich radial nach außen erstreckenden Abschnitt, der sich von der äußeren Umfangsfläche der Welle radial nach außen erstreckt und an einer axialen Seite des Innenrings des Lagers anliegt; ein ringförmiges elastisches Element, das zwischen dem Innenring des Lagers und der Welle angeordnet ist und verwendet wird, um den Innenring des Lagers relativ zur Welle in Umfangsrichtung zu befestigen; und einen Anschlag, der stationär mit der Welle verbunden ist und an der anderen axialen Seite des Innenrings des Lagers anliegt, so dass der Innenring des Lagers relativ zur Welle axial befestigt ist.

## Beschreibung

### Technisches Gebiet

Die vorliegende Erfindung betrifft das technische Gebiet der Mechanik. Insbesondere betrifft die vorliegende Erfindung eine Lagerbefestigungsvorrichtung und ein die Lagerbefestigungsvorrichtung umfassendes Hybridleistungsmodul.

### Hintergrund der Erfindung

Die Montage eines Lagers auf der Welle kann üblicherweise durch die Presspassung des Innenrings des Lagers und der Welle erreicht werden. In einigen Fällen müssen jedoch aufgrund von Einschränkungen durch die Gesamtstruktur der Innenring des Lagers und die Welle zum losen Passen ausgelegt sein. In einem solchen Fall muss eine spezielle Befestigungsvorrichtung vorhanden sein, um das Lager auf der Welle zu befestigen.

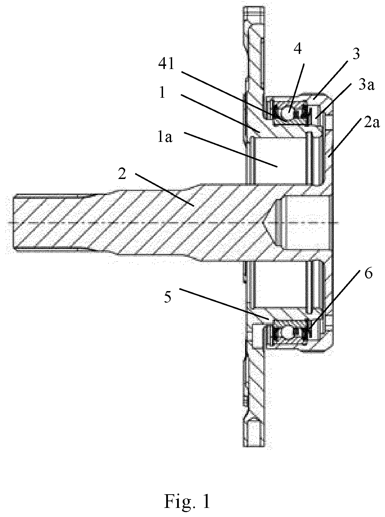

Figur 1 zeigt eine Lagerbefestigungsvorrichtung mit einer losen Passung des Innenrings des Lagers und der Welle in einem P2-Hybridleistungsmodul nach dem Stand der Technik. Insbesondere umfasst das in Figur 1 gezeigte Hybridleistungsmodul einen Motor mit einer Rotorwelle 1 und einer Antriebswelle 2, wobei die Rotorwelle 1 ein Mittelloch 1a aufweist und die Antriebswelle 2 in der rechten Seite der Figur ein Drehmomentausgabeende 2a aufweist, das das vom Motor ausgegebene Drehmoment an das Getriebe überträgt.

Die Antriebswelle 2 ist am Drehmomentausgabeende 2a mit einem Außenringabschnitt 3 versehen, wobei der Außenringabschnitt 3 den Wellenabschnitt der Antriebswelle 2 umgibt und stationär mit dem Wellenabschnitt verbunden ist. Der Außenringabschnitt 3 und der Wellenabschnitt der Antriebswelle 2 definieren einen Aufnahmeraum 3a, wobei der Wellenabschnitt der Rotorwelle 1 in den Aufnahmeraum 3a eingeführt ist und dem Außenringabschnitt 3 radial gegenüberliegt.

Zwischen dem Außenringabschnitt 3 und der Rotorwelle 1 ist ein Lager 4 vorgesehen, wobei das Lager 4 auf den Wellenabschnitt der Rotorwelle 1 gezogen ist, so dass die Rotorwelle 1 und die Antriebswelle 2 drehbar miteinander verbunden sind. Ein Ende des Wellenabschnitts der Rotorwelle 1 weist einen sich radial nach außen erstreckenden Abschnitt 5 auf, der verwendet wird, um an einer axialen Seite des Innenrings des Lagers 41 anzuliegen. Ein elastischer Sprengring 6 ist stationär mit dem anderen Ende des Wellenabschnitts der Rotorwelle 1 verbunden, wobei der elastische Sprengring 6 an der anderen Seite des Innenrings des Lagers 41 anliegt. Der elastische Sprengring 6 kann sich einerseits axial verformen, um eine axiale Vorspannkraft für das Lager 4 bereitzustellen, um zu verhindern, dass sich der Innenring des Lagers 41 und die Rotorwelle 1 relativ zueinander drehen; andererseits verhindert der elastische Sprengring 6 dadurch, dass er mit dem Wellenabschnitt der Rotorwelle 1 stationär verbunden ist und einen Außendurchmesser aufweist, der größer als der Innendurchmesser des Innenrings des Lagers 41 ist, dass das Lager 4 sich von der Rotorwelle 1 löst.

Obwohl die oben beschriebene Lagerbefestigungsvorrichtung das Lager auf der Welle befestigen kann, weist sie die nachfolgend beschriebenen Nachteile auf. Erstens ist der Montageprozess kompliziert, insbesondere ist es bei der Montage des elastischen Sprengrings erforderlich, Werkzeug zum Vorzentrieren, Zentrieren und Pressen zu verwenden, das aufgrund des begrenzten Montageraums sehr kompliziert ist. Zweitens muss die Fertigungsgenauigkeit der Lager, Wellen, elastischen Sprengringe und anderer Komponenten hoch sein, um sicherzustellen, dass der elastische Sprengring eine ausreichende Vorspannkraft für das Lager bereitstellt.

### Darstellung der Erfindung

Eine Aufgabe der vorliegenden Erfindung ist es, eine Lagerbefestigungsvorrichtung und ein die Lagerbefestigungsvorrichtung umfassendes Hybridleistungsmodul bereitzustellen, die den Montageprozess vereinfachen können. Eine weitere Aufgabe der vorliegenden Erfindung besteht darin, eine Lagerbefestigungsvorrichtung und ein die Lagerbefestigungsvorrichtung umfassendes Hybridleistungsmodul bereitzustellen, die die Anforderungen an die Fertigungsgenauigkeit der Wellen, Lager und anderer stationärer Komponenten verringern können.

In einem Aspekt der vorliegenden Erfindung wird eine Lagerbefestigungsvorrichtung bereitgestellt, die zum stationären Montieren des Lagers auf der Welle verwendet wird, wobei die Lagerbefestigungsvorrichtung Folgendes umfasst: einen sich radial nach außen erstreckenden Abschnitt, der sich von der äußeren Umfangsfläche der Welle radial nach außen erstreckt und an einer axialen Seite des Innenrings des Lagers anliegt; ein ringförmiges elastisches Element, das zwischen dem Innenring des Lagers und der Welle angeordnet ist und verwendet wird, um den Innenring des Lagers relativ zur Welle in Umfangsrichtung zu befestigen; und einen Anschlag, der stationär mit der Welle verbunden ist und an der anderen axialen Seite des Innenrings des Lagers anliegt, so dass der Innenring des Lagers axial zur Welle befestigt ist.

In einer Ausführungsform ist der Anschlag als ein auf die Welle gezogener Sperrring ausgebildet.

In einer weiteren Ausführungsform ist der Anschlag als ein elastischer Sperrring ausgebildet, der auf die Welle gezogen ist und in radialer Richtung elastisch verformt werden kann, und an der äußeren Umfangsfläche der Welle ist eine Ringnut angeordnet, wobei der Anschlag in der Ringnut aufgenommen ist.

In einer weiteren Ausführungsform umfasst der Anschlag einen ringförmigen Körper, der stationär mit der Welle verbunden ist; einen Verformungsabschnitt, der mit einem in axialer Richtung am Innenring des Lagers anliegenden Ende des ringförmigen Körpers verbunden ist und sich in radialer Richtung schräg nach außen erstreckt, wobei sich der Verformungsabschnitt in radialer Richtung elastisch verformen kann.

In einer weiteren Ausführungsform ist an der inneren Umfangsfläche des Innenrings des Lagers oder an der äußeren Umfangsfläche der Welle eine Ringnut angeordnet, wobei das ringförmige elastische Element in der Ringnut angeordnet ist.

In einer weiteren Ausführungsform ist das ringförmige elastische Element als ringförmiger Gummiring ausgebildet.

In einer weiteren Ausführungsform ist das ringförmige elastische Element als ringförmige elastische Membran ausgebildet, die zwischen dem Innenring des Lagers und der Welle angeordnet ist und auf die äußere Umfangsfläche der Welle gewickelt ist.

In einem weiteren Aspekt der vorliegenden Erfindung wird ein Hybridleistungsmodul bereitgestellt, das die Lagerbefestigungsvorrichtung nach einer der obigen Ausführungsformen umfasst und ferner einen Motor umfasst, wobei die Welle eine Rotorwelle des Motors ist; und eine Antriebswelle, an deren einem Ende ein Außenringabschnitt angeordnet ist, wobei der Außenringabschnitt den Wellenabschnitt der Antriebswelle umgebend angeordnet und stationär mit dem Wellenabschnitt verbunden ist, wobei der Außenringabschnitt und der Wellenabschnitt der Antriebswelle einen Aufnahmeraum definieren, die Rotorwelle in den Aufnahmeraum eingeführt ist und dem Außenringabschnitt radial gegenüberliegt, wobei das Lager zwischen der Rotorwelle und dem Außenringabschnitt eine Verbindung darstellt, so dass die Antriebswelle und die Rotorwelle drehbar miteinander verbunden sind.

In einer Ausführungsform ist der Anschlag vor dem Lager an der Rotorwelle montiert.

In einer Ausführungsform wird der Anschlag während der Montage des Lagers an der Rotorwelle durch die Kompression des Innenrings des Lagers elastisch radial verformt.

Die Lagerbefestigungsvorrichtung und das die Lagerbefestigungsvorrichtung umfassende Hybridleistungsmodul gemäß den obigen Ausführungsformen der vorliegenden Erfindung können den Montageprozess vereinfachen und die Anforderungen an die Fertigungsgenauigkeit der Wellen, Lager und anderer Befestigungskomponenten verringern.

### Kurzbeschreibung der Zeichnungen

Die Merkmale, Vorteile und technischen Wirkungen beispielhafter Ausführungsformen der vorliegenden Erfindung werden nachstehend in Verbindung mit den beigefügten Zeichnungen beschrieben, ähnliche Bezugszeichen in den Zeichnungen stellen ähnliche Elemente dar, wobei Folgendes gilt:
Figur 1 ist eine Querschnittsansicht eines Teils eines P2-Hybridleistungsmoduls umfassend eine Lagerbefestigungsvorrichtung gemäß dem Stand der Technik.
Figur 2 ist eine Querschnittsansicht eines Teils der mechanischen Struktur einer Lagerbefestigungsvorrichtung gemäß einer Ausführungsform der vorliegenden Erfindung und eine teilweise vergrößerte Ansicht der Querschnittsansicht.
Figur 3 ist eine perspektivische Ansicht eines elastischen Anschlags gemäß einer Ausführungsform der Erfindung.

### Ausführungsbeispiele

Nachfolgend werden Ausführungsformen der vorliegenden Erfindung unter Bezugnahme auf die Zeichnungen beschrieben. Die folgenden detaillierten Beschreibungen und Zeichnungen werden verwendet, um die Prinzipien der vorliegenden Erfindung zu veranschaulichen, wobei die vorliegende Erfindung nicht auf die beschriebenen bevorzugten Ausführungsformen beschränkt ist und der Umfang der vorliegenden Erfindung durch die Ansprüche definiert wird.

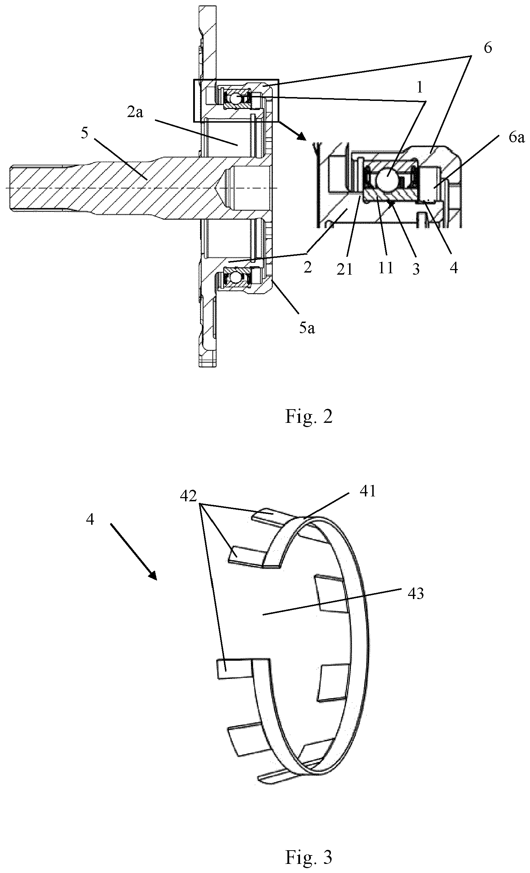

Figur 2 ist eine Querschnittsansicht eines Teils der mechanischen Struktur einer Lagerbefestigungsvorrichtung gemäß einer Ausführungsform der vorliegenden Erfindung und eine teilweise vergrößerte Ansicht der Querschnittsansicht.

Die in Figur 2 gezeigte Lagerbefestigungsvorrichtung wird verwendet, um im Falle einer losen Passung des Innenrings des Lagers und der Welle das Lager auf der Welle stationär zu montieren. Wie in Figur 2 gezeigt, ist das Lager 1 über die Welle 2 gezogen, wobei die Welle 2 einen sich radial nach außen erstreckenden Abschnitt 21 aufweist, der sich von ihrer äußeren Umfangsfläche radial nach außen erstreckt, und der sich radial nach außen erstreckende Abschnitt 21 an einer axialen Seite des Innenrings 11 des Lagers 1 anliegt. Die Lagerbefestigungsvorrichtung umfasst ferner ein ringförmiges elastisches Element 3 und einen Anschlag 4. Das ringförmige elastische Element 3 ist zwischen dem Innenring 11 des Lagers 1 und der Welle 2 angeordnet und wird verwendet, um den Innenring 11 des Lagers 1 relativ zur Welle 2 in Umfangsrichtung zu befestigen. Der Anschlag 4 ist so angeordnet, dass er stationär mit der Welle 2 verbunden ist, und er liegt an der anderen axialen Seite des Innenrings 11 des Lagers 1 an. Der Anschlag 4 wirkt mit dem radial nach außen gerichteten Abschnitt 21 der Welle 2 zusammen, um den Innenring 11 des Lagers 1 axial relativ zur Welle 2 zu befestigen.

Daher kann im Falle einer losen Passung zwischen dem Innenring des Lagers und der Welle der Innenring des Lagers durch ein ringförmiges elastisches Element relativ zur Umfangsrichtung der Welle befestigt werden, wodurch eine relative Drehung des Innenrings des Lagers und der Welle zueinander verhindert wird, und ferner wird durch den sich radial nach außen erstreckenden Abschnitt des Lagers und den Anschlag an beiden Seiten des Innenrings des Lagers in axialer Richtung eine Begrenzung erreicht, so dass der Innenring des Lagers axial zur Welle befestigt ist.

Die oben beschriebene Lagerbefestigungsvorrichtung kann ein Teil eines P2-Hybridleistungsmoduls sein. Das P2-Hybridleistungsmodul umfasst einen Motor. Die Welle 2 kann eine Rotorwelle eines Motors sein, die ein Mittelloch 2a aufweist. Das P2-Hybridleistungsmodul umfasst ferner eine Antriebswelle 5, die in axialer Richtung ein Drehmomentausgabeende 5a aufweist, und die Antriebswelle 5 überträgt das vom Motor ausgegebene Drehmoment über das Drehmomentausgabeende 5a auf das Getriebe.

Die Antriebswelle 5 weist am Drehmomentausgabeende 5a einen Außenringabschnitt 6 auf, wobei der Außenringabschnitt 6 den Wellenabschnitt der Antriebswelle 5 umgibt und stationär mit dem Wellenabschnitt verbunden ist. Der Außenringabschnitt 6 definiert ferner mit dem Wellenabschnitt der Antriebswelle 5 einen Aufnahmeraum 6a, wobei die Rotorwelle 2 in den Aufnahmeraum 6a eingeführt ist und dem Außenringabschnitt 6 radial gegenüberliegt. Das Lager 1 ist zwischen der Rotorwelle 2 und dem Außenringabschnitt 6 angeordnet, so dass die Antriebswelle 5 und die Rotorwelle 2 über das Lager 1 drehbar miteinander verbunden sind.

Das Lager 1 kann durch die Lagerbefestigungsvorrichtung der obigen Ausführungsform stationär auf der Rotorwelle 2 montiert sein. Insbesondere ist zur Befestigung des Lagers 1 in Umfangsrichtung relativ zur Rotorwelle 2 zwischen dem Innenring 11 des Lagers 1 und der Rotorwelle 2 ein ringförmiges elastisches Element 3 angeordnet.

In einer Ausführungsform kann das ringförmige elastische Element 3 ein üblicher Gummiring sein. An einer dem Innenring 11 des Lagers 1 radial gegenüberliegen äußeren Umfangsfläche der Rotorwelle 2 kann eine Ringnut angeordnet sein, wobei der Gummiring in der Ringnut angeordnet sein kann. Selbstverständlich sind die Ausführungsformen der vorliegenden Erfindung nicht hierauf beschränkt. Es ist auch möglich, dass die Ringnut zum Aufnehmen des Gummirings nicht an der Rotorwelle 2 angeordnet, sondern an der inneren Umfangsfläche des Innenrings 11 des Lagers 1 angeordnet ist. In einer weiteren Ausführungsform kann das ringförmige elastische Element 3 ferner als ringförmige elastische Membran ausgeführt sein, die auf die der Rotorwelle 2 und dem Innenring 11 des Lagers 1 radial gegenüberliegende äußere Umfangsfläche gewickelt sein kann. Im Falle einer losen Passung zwischen dem Innenring 11 des Lagers 1 und der Rotorwelle 2 wird, wenn das Lager 1 auf die Rotorwelle 2 gezogen wird, das ringförmige elastische Element 3 zusammengedrückt, und nach der Montage des Lagers 1 in seiner Position kann das ringförmige elastische Element 3 zwischen dem Innenring 11 des Lagers 1 und der Rotorwelle 2 zusammengedrückt werden, so dass das Lager 1 relativ zur Rotorwelle 2 in Umfangsrichtung befestigt wird. Das ringförmige elastische Element 3 kann selbstschmierend sein, um die Montage des Lagers 1 auf der Rotorwelle 2 zu erleichtern.

Um das Lager 1 relativ zur Rotorwelle 2 axial zu befestigen, begrenzen weiterhin der radiale Vorsprung 21 der Rotorwelle 2 und der Anschlag 4 das Lager an beiden axialen Seiten des Lagers 1. Insbesondere liegt der Innenring 11 des Lagers 1 an einer Seite in axialer Richtung am radialen Vorsprung 21 der Rotorwelle 2 an, und auf der anderen Seite in axialer Richtung liegt er an dem Anschlag 4 an, so dass eine axiale Befestigung relativ zur Rotorwelle 2 erreicht wird.

Hier kann der Anschlag 4 ein ringförmiger Sperrring sein, der stationär mit der Rotorwelle 2 verbunden und über die Rotorwelle 2 gezogen ist. Der Außendurchmesser des Sperrrings ist größer als der Innendurchmesser des Innenrings des Lagers ausgebildet, so dass verhindert werden kann, dass das Lager 1 sich von der Rotorwelle 2 löst. Der Sperrring kann durch das Verfahren der Presspassung stationär mit der Rotorwelle 2 verbunden sein. Das Verfahren der Presspassung erfordert keine zusätzliche Verbindungsstruktur und ist daher einfach zu bedienen.

In einer bevorzugten Ausführungsform ist der Anschlag 4 als elastischer Sperrring ausgebildet, der auf die Rotorwelle 2 gezogen ist und in radialer Richtung elastisch verformt werden kann. Dementsprechend kann an der äußeren Umfangsfläche der Rotorwelle 2 eine Ringnut vorgesehen sein, und der elastische Sperrring kann in dieser Ringnut aufgenommen sein. Auf diese Weise kann, obwohl der Außendurchmesser des als Anschlag fungierenden Anschlags 4 größer als der Innendurchmesser des Innenrings des Lagers ist, der Anschlag 4 vor dem Lager 2 in die Ringnut der Rotorwelle 2 montiert werden, bevor nach dem Montieren des Anschlags 4 in seiner Position das Lager 1 auf die Rotorwelle 2 gezogen wird. Wenn das Lager 1 auf die Rotorwelle 2 gezogen wird, kann der Innenring 11 des Lagers 1 den Anschlag 4 radial nach innen drücken, wodurch der Anschlag 4 elastisch radial verformt und in Richtung des Bodens der Ringnut zusammengezogen wird. Somit kann das Lager 1 problemlos auf die Rotorwelle 2 gezogen werden. Nachdem das Lager 1 in seiner Position montiert ist, kann der Anschlag 4 radial nach außen zurückprallen und an dem Innenring 11 des bereits in seiner Position montierten Lagers 1 anliegen, wodurch die axiale Position des Lagers 1 definiert wird und verhindert wird, dass das Lager 1 sich von der Rotorwelle 2 löst.

Verglichen mit der Lagerbefestigungsvorrichtung des Standes der Technik in Figur 1 kann eine solche Lagerbefestigungsvorrichtung den Zusammenbauprozess von Rotorwelle und Antriebswelle vereinfachen und auch die Anforderungen an die Fertigungsgenauigkeit der Rotorwellen, Lager, Anschläge und anderer Komponenten verringern. Insbesondere wird durch die relativ große axiale Vorspannkraft, die der elastische Sprengring in der in Figur 1 gezeigten Struktur auf das Lager ausübt, verhindert, dass der Innenring des Lagers sich relativ zur Rotorwelle dreht. Um eine ausreichend große Vorspannkraft bereitzustellen, weist der elastische Sprengring daher eine hohe Steifigkeit auf, so dass viel Kraft erforderlich ist, um ihn zu verformen. Um zu verhindern, dass sich das Lager von der Rotorwelle löst, ist ferner der Außendurchmesser des elastischen Sprengrings größer als der Innendurchmesser des Innenrings des Lagers. Daher ist es beim Zusammenbau von Rotorwelle und Antriebswelle normalerweise erforderlich, den elastischen Sprengring nach dem Lager auf die Rotorwelle zu ziehen. Beim Zusammenbau wird zuerst der elastische Sprengring in dem durch den Außenringabschnitt definierten Aufnahmeraum vormontiert; dann werden der Außenring des Lagers und die innere Umfangsfläche des Außenringabschnitts stationär verbunden; anschließend wird die Antriebswelle betätigt und durch das Mittelloch der Rotorwelle geführt, so dass das Lager in Figur 1 von rechts über die Rotorwelle gezogen wird; schließlich wird der elastische Sprengring betätigt, um das Lager axial vorzuspannen. Hier ist es beim Betätigen des elastischen Sprengrings erforderlich, Spezialwerkzeug zu verwenden, um durch das Betätigungsfenster auf dem Verbindungsabschnitt zwischen dem Außenringabschnitt und dem Wellenabschnitt der Antriebswelle zu arbeiten. Die spezifischen Betätigungen umfassen das Vorzentrieren, Zentrieren und Pressen des elastischen Sprengrings. Der oben beschriebene Montageprozess ist umständlich, und das Montagewerkzeug ist kompliziert. Um sicherzustellen, dass der elastische Sprengring eine ausreichend große Vorspannkraft bereitstellt, muss außerdem die Positionsgenauigkeit des elastischen Sprengrings in axialer Richtung hoch sein. Daher muss die Fertigungsgenauigkeit von Komponenten wie Rotorwellen, Lagern und elastischen Sprengringen hoch sein.

In der erfindungsgemäßen Lagerbefestigungsvorrichtung muss der Anschlag keine große Vorspannkraft bereitstellen, um zu verhindern, dass sich der Innenring des Lagers relativ zur Rotorwelle dreht, sondern er dient nur als Anschlag (die Befestigung in Umfangsrichtung wird durch ein ringförmiges elastisches Element erreicht), daher kann der Anschlag eine kleinere Steifigkeit aufweisen. Ferner kann, wenn der Anschlag elastisch radial verformt werden kann, der Anschlag vor dem Lager auf die Rotorwelle montiert werden, selbst wenn der Anschlag aufgrund der Anschlagwirkung einen Außendurchmesser aufweist, der größer als der Innendurchmesser des Innenrings des Lagers ist. Das heißt, wenn das Lager nach der Montage des Anschlags gemäß Figur 2 von der rechten Seite auf die Rotorwelle gezogen wird, kann der Innenring des Lagers den Anschlag aufgrund der geringen Steifigkeit des Anschlags leicht gegen den Boden der Nut drücken, und er kann problemlos auf die Rotorwelle gezogen werden, ohne dass der Innenring des Lagers beschädigt wird. Daher ist es beim Zusammenbau von Rotorwelle und Antriebswelle nicht mehr erforderlich, den Anschlag zu betätigen, nachdem das Lager auf die Rotorwelle gezogen wurde, was nicht nur den Montageprozess vereinfacht, sondern auch das komplizierte Werkzeug für das Vorzentrieren, Zentrieren und Pressen des elastischen Sprengrings einspart. Da der Anschlag keine ausreichend große axiale Vorspannkraft bereitstellen muss, wird außerdem die Anforderung an seine axiale Positionsgenauigkeit verringert, so dass die Anforderungen an die Fertigungsgenauigkeit der Rotorwellen, Lager, Anschläge und anderer Komponenten verringert werden können.

Figur 3 zeigt eine spezifische Ausführungsform des elastischen Anschlags. Wie in Figur 3 gezeigt, umfasst der elastische Anschlag 4 einen ringförmigen Körper 41, der zum stationären Verbinden mit der Rotorwelle 2 verwendet wird; der Verformungsabschnitt 42 ist mit einem in axialer Richtung am Lager 1 anliegenden Ende des ringförmigen Körpers 41 verbunden und relativ zur Axiallinie radial nach außen geneigt, wobei der Verformungsabschnitt 42 so angeordnet ist, dass er sich in radialer Richtung elastisch verformen kann.

Wenn der ringförmige Körper 41 an der Ringnut auf der Rotorwelle 2 montiert ist, ist er stationär am Boden der Ringnut der Rotorwelle 2 verbunden und liegt an dem axial von Lager 1 entfernten Ende an der axialen Seitenwand der Ringnut an. Beispielsweise kann der ringförmige Körper 41 durch das Verfahren der Presspassung am Boden der Ringnut stationär mit der Rotorwelle 2 verbunden sein. Der Verformungsabschnitt 42 erstreckt sich schräg radial nach außen, wobei sein Ende über den Rand der Öffnung der Ringnut hinausragt. Der Verformungsabschnitt 42 kann als eine Vielzahl von Trennplatten ausgebildet sein, die in der Umfangsrichtung des Körpers 41 angeordnet ist.

Während das Lager 1 auf die Rotorwelle 2 gezogen wird, wird der Verformungsabschnitt 42 vom Lager 1 in Richtung des Bodens der Ringnut bis unterhalb des Randes der Öffnung der Ringnut gepresst, um die Montage des Lagers 1 an der Rotorwelle 2 zu erleichtern. Nachdem das Lager 1 an seiner Position montiert wurde, prallt der Verformungsabschnitt 42 radial nach außen zurück und liegt an seinem Ende am Innenring 11 des Lagers 1 an, wodurch erreicht wird, dass verhindert wird, dass das Lager 1 sich von der Rotorwelle 2 löst.

Ferner kann, wie in Figur 3 gezeigt, der elastische Anschlag 4 als eine Öffnung 43 über der Umfangsrichtung angeordnet sein. Die Anordnung der Öffnung 43 erleichtert die Montage des elastischen Anschlags 4 auf der Rotorwelle 2, und der elastische Anschlag 4 kann ohne Verwendung von Montagewerkzeug montiert werden, was den Montageprozess weiter vereinfacht.

Die technische Lösung der vorliegenden Erfindung wird oben am Beispiel der Lagerbefestigung im P2-Hybridleistungsmodell erläutert. Die Ausführungsformen der vorliegenden Erfindung sind jedoch nicht auf die Verwendung in P2-Hybridleistungsmodulen beschränkt. Im Falle einer losen Passung des Lagers und der Welle kann das Prinzip der erfindungsgemäßen Lagerbefestigungsvorrichtung auf jede andere mechanische Vorrichtung angewendet werden.

Obwohl die vorliegende Erfindung unter Bezugnahme auf beispielhafte Ausführungsformen beschrieben wurde, versteht es sich, dass die vorliegende Erfindung nicht auf die Konstruktionen und Verfahren der oben beschriebenen Ausführungsformen beschränkt ist. Die vorliegende Erfindung soll stattdessen verschiedene Modifikationen und äquivalente Konfigurationen abdecken. Obwohl verschiedene Elemente und Verfahrensschritte der offenbarten Erfindung in verschiedenen beispielhaften Kombinationen und Konstruktionen gezeigt sind, fallen darüber hinaus auch andere Zusammensetzungen, die mehr oder weniger Elemente oder Verfahren umfassen, in den Umfang der Erfindung.

## Patentansprüche

1. Lagerbefestigungsvorrichtung zum stationären Montieren des Lagers auf einer Welle, wobei die Lagerbefestigungsvorrichtung Folgendes umfasst:
einen sich radial nach außen erstreckenden Abschnitt, der sich von der äußeren Umfangsfläche der Welle radial nach außen erstreckt und an einer axialen Seite des Innenrings des Lagers anliegt;
ein ringförmiges elastisches Element, das zwischen dem Innenring des Lagers und der Welle angeordnet ist und verwendet wird, um den Innenring des Lagers relativ zur Welle in Umfangsrichtung zu befestigen; und
einen Anschlag, der stationär mit der Welle verbunden ist und an der anderen axialen Seite des Innenrings des Lagers anliegt, so dass der Innenring des Lagers relativ zur Welle axial befestigt ist.

2. Lagerbefestigungsvorrichtung nach Anspruch 1, wobei
der Anschlag als Sperrring ausgebildet ist, der auf die Welle gezogen ist.

3. Lagerbefestigungsvorrichtung nach Anspruch 1 oder 2, wobei
der Anschlag als elastischer Sperrring ausgebildet ist, der auf die Welle gezogen ist und radial elastisch verformt werden kann, und
an der äußeren Umfangsfläche der Welle eine Ringnut angeordnet ist, wobei der Anschlag in der Ringnut aufgenommen ist.

4. Lagerbefestigungsvorrichtung nach Anspruch 3, wobei der Anschlag Folgendes umfasst:
einen ringförmigen Körper, der stationär mit der Welle verbunden ist;
einen Verformungsabschnitt, der mit einem in axialer Richtung am Innenring des Lagers anliegenden Ende des ringförmigen Körpers verbunden ist und sich in radialer Richtung schräg nach außen erstreckt, wobei sich der Verformungsabschnitt in radialer Richtung elastisch verformen kann.

5. Lagerbefestigungsvorrichtung nach Anspruch 1, wobei
eine Ringnut an der inneren Umfangsfläche des Innenrings des Lagers oder der äußeren Umfangsfläche der Welle angeordnet ist und das ringförmige elastische Element in der Ringnut angeordnet ist.

6. Lagerbefestigungsvorrichtung nach Anspruch 1 oder 5, wobei
das ringförmige elastische Element als ringförmiger Gummiring ausgebildet ist.

7. Lagerbefestigungsvorrichtung nach Anspruch 1, wobei
das ringförmige elastische Element als ringförmige elastische Membran ausgebildet ist, die zwischen dem Innenring des Lagers und der Welle angeordnet ist und auf die äußere Umfangsfläche der Welle gewickelt ist.

8. Hybridleistungsmodul, umfassend die Lagerbefestigungsvorrichtung nach einem der Ansprüche 1 bis 7, ferner Folgendes umfassend:
einen Motor, wobei die Welle eine Rotorwelle des Motors ist;
eine Antriebswelle, an deren einem Ende ein Außenringabschnitt angeordnet ist, wobei der Außenringabschnitt den Wellenabschnitt der Antriebswelle umgibt und stationär mit dem Wellenabschnitt verbunden ist, wobei der Außenringabschnitt und der Wellenabschnitt der Antriebswelle einen Aufnahmeraum definieren, die Rotorwelle in den Aufnahmeraum eingeführt ist und dem Außenringabschnitt radial gegenüberliegt, wobei das Lager zwischen der Rotorwelle und dem Außenringabschnitt eine Verbindung darstellt, so dass die Antriebswelle und die Rotorwelle drehbar miteinander verbunden sind.

9. Hybridleistungsmodul nach Anspruch 8, wobei
der Anschlag vor dem Lager auf der Rotorwelle montiert ist.

10. Hybridleistungsmodul nach Anspruch 9, wobei
der Anschlag während der Montage des Lagers auf der Rotorwelle durch die Kompression des Innenrings des Lagers elastisch radial verformt wird.
